Europäisches Patentamt

European Patent Office

Office européen des brevets

Publication number: **0 318 667**
**A2**

# EUROPEAN PATENT APPLICATION

Application number: 88116249.9

Int. Cl.4: **B29C 47/82**

Date of filing: 30.09.88

Priority: 09.10.87 IT 8416587

Date of publication of application:
07.06.89 Bulletin 89/23

Designated Contracting States:
AT CH DE ES FR GB IT LI

Applicant: **R.I.C.A. RESISTENZE INDUSTRIALI CORAZZATE E AFFINI S.p.A.**
**Via Podgora, 26**
**I-31029 Vittorio Veneto Treviso(IT)**

Inventor: **Nadal, Bruno**
**Via Borgo Costacurta, 32**
**I-31012 Cappella Maggiore(IT)**
Inventor: **Pianca, Fausto**
**Via Aquileia, 7**
**I-31016 Cordignano Treviso(IT)**

Representative: **Piovesana, Paolo**
**Corso del Popolo, 70**
**I-30172 Venezia-Mestre(IT)**

## Extruder device for plastics materials.

An extruder device for plastics material characterised by comprising a cylindrical body (1) provided externally with a cylindrical sleeve (3) of heat-conducting material which comprises in that surface in contact with said cylindrical body at least one continuous groove (4) for the passage of a cooling fluid and has the resistance heating elements applied to its outer surface.

FIG.2

EP 0 318 667 A2

This invention relates to an extruder device for plastics materials.

Known extruders for plastics materials comprise a cylinder provided with an inner cavity in which one or more feed screws rotate to push the molten plastics material through a die positioned at the front end of the cavity.

Generally this cylinder is fed with plastics material in the form of granules and is subjected to intense heating to melt them and obtain a pasty material which is pushed forward by the feed screw. The cylinder is generally heated by band-type resistance elements applied about its outer surface.

However the friction generated between the screw or screws and the inner surface of the cylinder cavity housing it or them generates a considerable quantity of heat which means that a temperature control system has to be provided for the cylinder. This control system does not only have to periodically interrupt the power to the resistance heating elements but also has to cool the outer surface of the extrusion cylinder when necessary.

A known method for implementing this cooling is to enclose the cylinder and its applied resistance heating elements in a ventilated casing.

However. this method has given unsatisfactory results because:
- the ventilation air which cools the cylinder also cools the resistance elements, resulting in high energy wastage and an increase in thermal inertia when the correct operating conditions are reinstated.
- the cooling air stream does not encounter the entire cylinder surface but only that part not covered by the resistance element bands.

To obviate this drawback it has also been proposed to provide a series of parallel grooves in the cylinder outer surface exposed to the ventilation air to thus increase the dispersant surface, and to fit the resistance heating element bands on the outside of these grooves.

However, this known method has the drawback of high cost, due to the need for laborius mechanical machining of the cylinder.

This problem is solved according to the invention by an extruder device for plastics material characterised by comprising a cylindrical body provided externally with a sleeve of heat-conducting material which comprises in that surface in contact with said cylindrical body at least one continuous groove for the passage of a cooling fluid and has the resistance heating elements applied to its outer surface.

A preferred embodiment of the present invention is described hereinafter by way of non-limiting example with reference to the accompanying drawings in which:

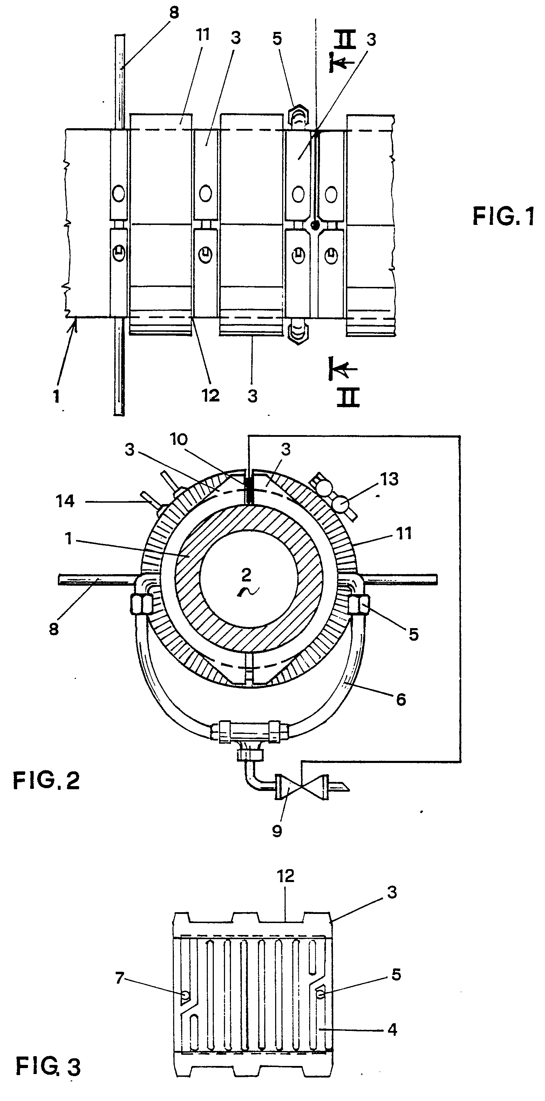

Figure 1 is a side view of an extruder device according to the invention;

Figure 2 is a cross-section there through on the line II-II of figure 1, and

Figure 3 is an inner side view of part of the grooved sleeve.

As can be seen from the figures. the extruder device according to the invention comprises a cylindrical body 1 provided internally with an axial cylindrical cavity 2 housing a conventional extrusion screw (not shown).

Two half-shells 3 constructed of die-cast aluminium. or of bronze. brass or any other suitable heat-conducting material. and comprising a labyrinth channel coil arrangement 4 in their inner surface, are applied to the outer surface of the cylinder 1. This arrangement is connected at one end to a connector 5 for a compressed cooling air feed pipe 6 and at its other end to a connector 7 for a discharge pipe 8 for said compressed air.

The two compressed air feed pipes 6 of the two half-shells 3 are connected to a T junction connected to the compressed air source by way of a solenoid valve 9 controlled by a temperature probe 10 embedded in the body of the cylinder 1.

The heater elements 11 are applied to the outside of the two aluminium half-shells 3. Bach element consists of an externally insulated band of resistive material kept adhering to the two half-shells 3 by being fixed by means of a staybolt 13 in a suitable circumferential seat 12 provided therein.

The heater elements 11 are powered externally through suitable connectors 14.

The extruder device according to the invention operates as follows. The resistance heating elements 11 are firstly switched on and rapidly heat the cylinder 1 to the correct temperature because of the constituent heat-conducting material of the half-shells 3. However, during the operation of the extruder cylinder the friction generated between its inner walls and the screw gradually causes the temperature to rise so that the temperature probe 10 operates to firstly interrupt power to the resistance elements 11 and then open the solenoid valve 9 to allow compressed air to flow through the coil arrangement 4 and cool the cylinder until correct operating conditions are restored. The control system, which is shown herein by way of example as a temperature probe 10 an a solenoid valve 9 connected together, is much more complicated and sophisticated in practice. however it forms part of the state of the art available to any expert and does not constitute part of the invention.

From the aforegoing it is apparent that the extruder device according to the invention has numerous advantages, and in particular:
- it allows perfect uniform temperature control of the cylinder to be obtained without any energy wastage,
- it is of simple an economical construction in that the cooling channel coils are provided in the half-shells, these being components which can be constructed without special mechanical machining, and in particular by casting.

## Claims

1. An extruder device for plastics material characterised by comprising a cylindrical body (1) provided externally with a cylindrical sleeve (3) of heat-conducting material which comprises in that surface in contact with said cylindrical body at least one continuous groove (4) for the passage of a cooling fluid and has the resistance heating elements applied to its outer surface.

2. A device as claimed in claim 1, characterised in that the continuous groove (4) is connected to a compressed gas source by an external pipe (6).

3. A device as claimed in claim 1, characterised in that the cylindrical sleeve consist of two half-shells (3) joined together, each half-shell (3) comprising at least one continuous groove (4) connected to two external pipes (6, 8) for feed and discharge of the cooling fluid respectively.

4. A device as claimed in claim 1, characterised in that each groove (4) is of labytinth type.

5. A device as claimed in claim 1 and/or 3, characterised in that the sleeve, and specifically each half-shell (3), is provided in its outer surface with circumferential seats (12) for housing the heater elements (11).

6. A device as claimed in claim 1, characterised in that the sleeve (3) is constructed of die-cast aluminium.

FIG. 1

FIG. 2

FIG. 3